# EUROPÄISCHE PATENTSCHRIFT

(11) **EP 2 178 730 B1**
(45) Veröffentlichungstag und Bekanntmachung des Hinweises auf die Patenterteilung: **19.09.2012**
(21) Anmeldenummer: 08787034.1
(22) Anmeldetag: 08.08.2008
(51) Int. Cl.: B60L 15/20, F16H 61/04, B60K 6/547, B60W 10/11, B60W 30/19, B60K 6/48, B60W 10/06, B60W 10/08, B60W 10/26, B60W 20/00

(54) **VERFAHREN ZUR DURCHFÜHRUNG EINER ZUGKRAFTUNTERBROCHENEN SCHALTUNG BEI EINEM PARALLELEN HYBRIDFAHRZEUG**
METHOD FOR CARRYING OUT A TRACTIVE-FORCE INTERRUPTED SHIFTING IN A PARALLEL HYBRID VEHICLE
PROCÉDÉ DE RÉALISATION D'UN CHANGEMENT DE RAPPORT INTERROMPU PAR UNE FORCE DE TRACTION DANS UN VÉHICULE HYBRIDE PARALLÈLE

(30) Priorität: 16.08.2007 DE 102007038773
(43) Veröffentlichungstag der Anmeldung: 28.04.2010
(73) Patentinhaber: ZF Friedrichshafen AG, 88038 Friedrichshafen (DE)
(72) Erfinder: WALLNER, Stefan, 6900 Bregenz (AT)
(86) Internationale Anmeldenummer: PCT/EP2008/060438
(87) Internationale Veröffentlichungsnummer: WO 2009/021911

(56) Entgegenhaltungen:
- EP-A- 1 527 927
- WO-A-00/03163
- WO-A-2006/020476
- DE-A1- 10 126 348
- FR-A- 2 722 738
- US-A- 6 166 512
- US-A1- 2005 164 827
- US-B1- 6 319 168

## Beschreibung

Die vorliegende Erfindung bezieht sich auf ein Verfahren zur Durchführung einer zugkraftunterbrochenen Schaltung bei ausgefallener elektrischer Maschine oder bei vollem Energiespeicher im Hybridbetrieb bei einem parallelen Hybridfahrzeug umfassend ein automatisiertes Getriebe gemäß dem Oberbegriff des Patentanspruchs 1.

Aus dem Stand der Technik sind Hybridfahrzeuge umfassend ein Hybridgetriebe bekannt. Sie umfassen zusätzlich zu dem Verbrennungsmotor zumindest einen Elektromotor bzw. eine elektrische Maschine. Bei seriellen Hybridfahrzeugen wird ein Generator vom Verbrennungsmotor angetrieben, wobei der Generator den die Räder antreibenden Elektromotor mit elektrischer Energie versorgt. Des weiteren sind parallele Hybridfahrzeuge bekannt, bei denen eine Addition der Drehmomente des Verbrennungsmotors und zumindest einer mit dem Verbrennungsmotor verbindbaren elektrischen Maschine erfolgt. Hierbei sind die elektrischen Maschinen mit dem Riementrieb oder mit der Kurbelwelle des Verbrennungsmotors verbindbar. Die vom Verbrennungsmotor und/oder der zumindest einen elektrischen Maschine erzeugten Drehmomente werden über ein nachgeschaltetes Getriebe an die angetriebene Achse übertragen.

Das gattungsbildenden Dokument US2005/0164827 offenbart ein Verfahren zur Durchführung einer zugkraftunterbrochenen Schaltung bei ausgefallener elektrischer Maschine oder bei vollem Energiespeicher im Hybridbetrieb bei einem parallelen Hybridfahrzeug, umfassend ein automatisiertes Getriebe, wobei bei einer Hochschaltung die elektrischen Maschine angesteuert wird, wodurch bei der elektrischen Maschine ein Moment erzeugt wird, welches genutzt wird, um den Getriebeeingang zu synchronisieren.

Beispielsweise ist im Rahmen der DE102006019679 A1 ein Antriebsstrang mit einem elektrisch verstellbaren Hybridgetriebe und einem elektrohydraulischen Steuersystem, mehreren elektrischen Leistungseinheiten und mehreren Drehmomentübertragungsmechanismen bekannt. Hierbei können die Drehmomentübertragungsmechanismen durch das elektrohydraulische Steuersystem selektiv eingerückt werden, um vier Vorwärtsgänge, einen neutralen Zustand, eine elektrische Betriebsart mit niedriger und hoher Drehzahl, eine elektrisch verstellbare Betriebsart mit niedriger und hoher Drehzahl und eine Berghalte-Betriebsart bereitzustellen.

Aus der DE 102005057607 B3 ist ein Hybridantrieb für Fahrzeuge bekannt, zumindest beinhaltend einen Hauptmotor, insbesondere eine Brennkraftmaschine, einen Generator, einen Elektromotor und ein, ein Sonnenrad, ein Hohlrad, einen Planetenträger sowie Planetenräder aufweisendes Planetengetriebe, das mindestens eine Abtriebswelle beinhaltet. Hierbei ist vorgesehen, dass für einen ersten Fahrbereich des Fahrzeuges zur Addition der Drehmomente die Antriebswellen des Hauptmotors und des Elektromotors auf das Sonnenrad des Planetengetriebes gekoppelt sind und für einen weiteren Fahrbereich einer der beiden Motoren zur mechanischen Addition der Drehzahlen entsprechend dem Überlagerungsprinzip kraftschlüssig auf das Hohlrad des Planetengetriebes koppelbar ist.

Bei Fahrzeugen umfassend ein automatisiertes Getriebe muss bevor ein Gang ausgelegt werden kann, der Getriebeeingang lastfrei sein; des weiteren muss bevor der neue Gang eingelegt werden kann, der Getriebeeingang synchronisiert werden.

Nach dem Stand der Technik erfolgt eine zugkraftunterbrochene Schaltung bei Hybridfahrzeugen mit einem automatisierten Getriebe im Hybridbetrieb dadurch, dass in einem ersten Schritt ein Lastabbau beim Verbrennungsmotor und bei der elektrischen Maschine durchgeführt wird, wobei anschließend der Verbrennungsmotor durch Öffnen einer Kupplung vom Antriebsstrang abgekoppelt wird. Nach dem Abkoppeln des Verbrennungsmotors wird der alte Gang ausgelegt und die Drehzahl der elektrischen Maschine auf Synchrondrehzahl gebracht, wobei anschließend der neue Gang eingelegt und der Verbrennungsmotor angekoppelt wird und beim Verbrennungsmotor und bei der elektrischen Maschine ein Lastaufbau durchgeführt wird.

Aus einer den gleichen Zeitrang wie die vorliegende Patentanmeldung aufweisenden Patentanmeldung der Anmelderin geht ein Verfahren zur Durchführung einer zugkraftunterbrochenen Schaltung im Hybridbetrieb bei einem parallelen Hybridfahrzeug unfassend ein automatisiertes Getriebe hervor, im Rahmen dessen der Verbrennungsmotor und die elektrische Maschine miteinander gekoppelt bleiben, wobei der Lastabbau vor dem Auslegen des alten Ganges und das Synchronisieren auf den neuen Gang durch den Betrieb der elektrischen Maschine erfolgen.

Hierbei wird insbesondere vorgeschlagen, zum Lastabbau vor dem Auslegen des alten Ganges die elektrische Maschine derart zu betreiben, dass sie das Moment des Verbrennungsmotors kompensiert, wobei während des Lastausgleichs der Verbrennungsmotor mit konstantem Moment betrieben wird und nur dann ein Momenteingriff am Verbrennungsmotor erfolgt, wenn das Moment des Verbrennungsmotors einen Schwellenwert überschreitet oder wenn der Energiespeicher des Fahrzeugs durch den Lastausgleich mittels der elektrischen Maschine zu stark geladen würde. Nach erfolgtem Lastabbau wird der alte Gang ausgelegt, wobei anschließend die Synchronisierung auf den neuen Gang durchgeführt wird, indem die Drehzahl der elektrischen Maschine auf die Synchrondrehzahl des neuen Ganges gebracht wird. Die Drehzahlanpassung der elektrischen Maschine erfolgt vorzugsweise in einen Drehzahlregelmodus, in dem
die Maschine überführt wird, wobei das Moment des Verbrennungsmotors als Vorsteuermoment für den Drehzahlregler der elektrischen Maschine dient.

Bei den beschriebenen Verfahren kann bei ausgefallener elektrischer Maschine oder bei vollem Energiespeicher des Hybridfahrzeugs die Situation entstehen, dass bei Hochschaltungen, insbesondere Zughochschaltungen der Lastabbau bzw. das Synchronisieren des Getriebeeingangs nicht mehr möglich ist. Dies resultiert in einer sehr langen Dauer der Schaltung, was aus Komfort - und Fahrsicherheitsgründen nicht akzeptabel ist.

Des weiteren können auch bei einer Rückschaltung Verzögerungen entstehen, wenn die elektrische Maschine nicht zur Verfügung steht.

Der vorliegenden Erfindung liegt die Aufgabe zugrunde, ein Verfahren zur Durchführung einer zugkraftunterbrochenen Schaltung bei ausgefallener elektrischer Maschine oder bei vollem Energiespeicher im Hybridbetrieb bei einem parallelen Hybridfahrzeug, umfassend ein automatisiertes Getriebe anzugeben, durch dessen Durchführung das Fahrzeug trotz ausgefallener elektrischer Maschine fahrfähig bleibt.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird vorgeschlagen, bei einer Hochschaltung, insbesondere bei einer Zughochschaltung bei vollem Energiespeicher oder ausgefallener elektrischer Maschine, den mit der elektrischen Maschine verbundenen Wechselrichter mit einem aktiven Kurzschluss anzusteuern. Im kurzgeschlossenen Zustand wird bei der elektrischen Maschine Moment erzeugt, welches erfindungsgemäß genutzt wird, um den Getriebeeingang zu synchronisieren.

Für den Fall einer Rückschaltung wird vorgeschlagen, den Getriebeeingang durch eine entsprechende Steuerung des Verbrennungsmotors zu synchronisieren, wobei der Verbrennungsmotor mit der mit dem Getriebeeingang verbundenen elektrischen Maschine gekoppelt sein kann.

Für den Fall, dass beim Lastabbau zum Auslegen des alten Ganges der Verbrennungsmotor mit der elektrischen Maschine gekoppelt ist, erfolgt das Abbremsen des Verbrennungsmotors zum Lastabbau ebenfalls dadurch, dass der mit der elektrischen Maschine verbundene Wechselrichter mit einem aktiven Kurzschluss angesteuert wird, wodurch bei der elektrischen Maschine ein Moment erzeugt wird, welches genutzt wird, um den Getriebeeingang abzubremsen. Hierbei kann der Verbrennungsmotor mit konstantem Moment betrieben werden.

Durch die erfindungsgemäße Konzeption wird ein Verfahren zur Verfügung gestellt, durch dessen Durchführung ein paralleles Hybridfahrzeug mit einem automatisierten Getriebe trotz ausgefallener bzw. nicht zur Verfügung stehender elektrischer Maschine fahrfähig bleibt.

## Patentansprüche

1. Verfahren zur Durchführung einer zugkraftunterbrochenen Schaltung bei ausgefallener elektrischer Maschine oder bei vollem Energiespeicher im Hybridbetrieb bei einem parallelen Hybridfahrzeug, umfassend ein automatisiertes Getriebe, wobei bei einer Hochschaltung der mit der elektrischen Maschine verbundene Wechselrichter mit einem aktiven Kurzschluss angesteuert wird, wodurch bei der elektrischen Maschine ein Moment erzeugt wird, welches genutzt wird, um den Getriebeeingang zu synchronisieren.

2. Verfahren zur Durchführung einer zugkraftunterbrochenen Schaltung bei ausgefallener elektrischer Maschine oder bei vollem Energiespeicher im Hybridbetrieb bei einem parallelen Hybridfahrzeug, nach Anspruch 1, **dadurch gekennzeichnet, dass** bei einer Rückschaltung der Getriebeeingang durch eine entsprechende Steuerung des Verbrennungsmotors synchronisiert wird.

3. Verfahren zur Durchführung einer zugkraftunterbrochenen Schaltung bei ausgefallener elektrischer Maschine oder bei vollem Energiespeicher im Hybridbetrieb bei einem parallelen Hybridfahrzeug, nach Anspruch 1 oder 2, **dadurch gekennzeichnet, dass** für den Fall, dass beim Lastabbau der Verbrennungsmotor mit der elektrischen Maschine gekoppelt ist, das Abbremsen des Verbrennungsmotors zum Lastabbau dadurch erfolgt, dass der mit der elektrischen Maschine verbundene Wechselrichter mit einem aktiven Kurzschluss angesteuert wird, wodurch bei der elektrischen Maschine ein Moment erzeugt wird, welches genutzt wird, um den Getriebeeingang abzubremsen.

## Claims

1. Method for carrying out a tractive force-interrupted shift with a failed electric machine or with a full energy storage unit in hybrid mode in the case of a parallel hybrid vehicle, comprising an automated transmission, wherein during an upshift the inverter connected to the electric machine is activated with an active short-circuit, as a result of which in the electric machine a torque is generated, which is utilized in order to synchronize the transmission input.

2. Method for carrying out a tractive force-interrupted shift with failed electric machine or with full energy storage unit in hybrid mode in the case of a parallel hybrid vehicle according to Claim 1, **characterized in that** upon a downshift the transmission input is synchronized through a corresponding control of the combustion engine.

3. Method for carrying out a tractive force-interrupted shift with failed electric machine or with full energy storage unit in hybrid mode in the case of a parallel hybrid vehicle according to Claim 1 or 2, **characterized in that** in the event that during the load removal the combustion engine is coupled to the electric machine, the deceleration of the combustion engine for the load removal is carried out **in that** the inverter connected to the electric machine is activated with an active short-circuit, as a result of which in the electric machine a torque is generated, which is utilized in order to decelerate the transmission input.

## Revendications

1. Procédé de réalisation d'un changement de vitesse interrompu par une force de traction lorsque le moteur électrique est arrêté ou que l'accumulateur d'énergie est plein en fonctionnement hybride dans un véhicule hybride parallèle, comprenant une boîte de vitesses automatisée, l'ondulateur relié au moteur électrique étant commandé en cas de changement de vitesse à la vitesse supérieure par le biais d'un court-circuit actif, permettant ainsi de produire un couple au niveau du moteur électrique utilisé pour synchroniser l'entrée de la boîte de vitesses.

2. Procédé de réalisation d'un changement de vitesse interrompu par une force de traction lorsque le moteur électrique est arrêté ou que l'accumulateur d'énergie est plein en fonctionnement hybride dans un véhicule hybride parallèle, selon la revendication 1, **caractérisé en ce qu'**en cas de rétrogradation de vitesse, l'entrée de boîte de vitesses est synchronisée par un élément de commande correspondant du moteur à combustion interne.

3. Procédé de réalisation d'un changement de vitesse interrompu par une force de traction lorsque le moteur électrique est arrêté ou que l'accumulateur d'énergie est plein en fonctionnement hybride dans un véhicule hybride parallèle, selon la revendication 1 ou 2, **caractérisé en ce que** si lors de l'extraction de charge, le moteur à combustion interne est couplé au moteur électrique, le ralentissement du moteur à combustion interne permettant l'extraction de charge se produit en commandant l'ondulateur relié au moteur électrique par le biais d'un court-circuit actif permettant de produire un couple pour le moteur électrique utilisé pour faire ralentir l'entrée de boîte de vitesses.
